(19)

Europäisches
Patentamt
European
Patent Office
Office européen
des brevets

(11) **EP 4 572 074 A1**

(12) **EUROPEAN PATENT APPLICATION**

(43) Date of publication:
**18.06.2025 Bulletin 2025/25**

(21) Application number: **24216874.8**

(22) Date of filing: **02.12.2024**

(51) International Patent Classification (IPC):
*H02J 3/46* (2006.01)      *H02J 3/38* (2006.01)
*H02J 3/24* (2006.01)

(52) Cooperative Patent Classification (CPC):
**H02J 3/46; H02J 3/241; H02J 3/381;** H02J 2300/24;
Y02E 10/56

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.12.2023 CN 202311732876**

(71) Applicant: **Huawei Digital Power Technologies
Co., Ltd.
Shenzhen, Guangdong 518043 (CN)**

(72) Inventors:
• **DENG, Han
  Shenzhen 518043 (CN)**
• **YU, Xinyu
  Shenzhen 518043 (CN)**
• **XIN, Kai
  Shenzhen 518043 (CN)**

(74) Representative: **Gill Jennings & Every LLP
The Broadgate Tower
20 Primrose Street
London EC2A 2ES (GB)**

(54) **POWER CONVERTER AND POWER SUPPLY SYSTEM**

(57) This application provides a power converter and a power supply system. A direct current input of the power converter is configured to connect to a photovoltaic module or an energy storage battery. An alternating current output of the power converter is configured to connect to a power grid or a load. The power converter includes a power conversion circuit and a controller. The power conversion circuit is configured to convert a direct current into an alternating current. The controller inputs a plurality of first signals to a direct current input of the power conversion circuit. Frequencies of the plurality of first signals progressively increase or decrease, and amplitudes of the plurality of first signals are the same. An alternating current output of the power conversion circuit outputs a plurality of second signals. The first signals are in a one-to-one correspondence with the second signals. The second signal and the corresponding first signal have a same frequency. Amplitudes of the plurality of second signals change as frequencies of the plurality of second signals progressively increase or decrease. The controller reduces an amplitude of a target second signal, where the target second signal is a second signal whose amplitude is a local maximum value in the plurality of second signals. According to this application, low-frequency oscillation in a working process of the power converter can be reduced.

FIG. 1

## Description

### TECHNICAL FIELD

This application relates to the field of power electronics, and in particular, to a power converter and a power supply system.

### BACKGROUND

As a proportion of new energy and power electronic devices in a power system increases, a proportion of conventional large-inertia rotary units decreases, that is, a quantity of devices that provide inertia and damping for the system decreases. As a result, an inertia level of the power system is significantly reduced, and an anti-disturbance capability is reduced, making the power system face more stability problems in supplying power to a power grid. In this case, a rotor motion equation is introduced into a control algorithm of a power converter and an inverter, so that devices such as the power converter and the inverter in the power system simulate external characteristics of a conventional synchronous generator, and can present equivalent inertia and damping characteristics to the power grid, to suppress output power fluctuation, provide active frequency and voltage support for the power grid, and improve system stability. However, in a process in which the devices such as the power converter and the inverter are connected to the power grid for working, equivalent negative damping may be introduced in a control loop due to reasons such as an inertia part, an excitation part, and long-distance power transmission of a motor. When the introduced equivalent negative damping is excessively large, low-frequency oscillation of output power may occur, resulting in unstable work of the power system. Therefore, how to resolve low-frequency oscillation generated in a process in which the power electronic device in the power system is connected to the power grid for working is one of technical problems to be urgently resolved currently.

### SUMMARY

Embodiments of this application provide a power converter and a power supply system, to reduce low-frequency oscillation in a working process of the power converter, so that outputting of the power converter is more stable.

According to a first aspect, this application provides a power converter. A direct current input of the power converter is configured to connect to a photovoltaic module or an energy storage battery. An alternating current output of the power converter is configured to connect to a power grid or a load. The power converter includes a power conversion circuit and a controller. The power conversion circuit is configured to convert a direct current into an alternating current. The controller inputs a plurality of first signals to a direct current input of the power conversion circuit. Frequencies of the plurality of first signals progressively increase or decrease, and amplitudes of the plurality of first signals are the same. Then an alternating current output of the power conversion circuit outputs a plurality of second signals. The first signals are in one-to-one correspondence with the second signals. In addition, the second signal and the corresponding first signal have a same frequency. Amplitudes of the plurality of second signals change as frequencies of the plurality of second signals progressively increase or decrease. The controller is further configured to reduce an amplitude of a target second signal, where the target second signal is a second signal whose amplitude is a local maximum value in the plurality of second signals.

In this application, if the amplitude corresponding to the target second signal in the plurality of second signals output by the power conversion circuit is the local maximum value, a low-frequency oscillation amplitude of the power converter at a frequency corresponding to the target second signal is relatively large. The controller reduces the amplitude of the target second signal, that is, reduces an amplitude of the second signal whose amplitude is the local maximum value in the plurality of second signals, to reduce low-frequency oscillation in a working process of the power converter, so that outputting of the power converter is more stable.

In a possible implementation, when the plurality of second signals include two or more second signals whose amplitudes are local maximum values, the amplitude of the target second signal is a target local maximum value, and a change rate of amplitudes of the plurality of second signals is the largest in a change range centered on the target local maximum value. A change rate near the target local maximum value is greater than a change rate near another local maximum value. In other words, an absolute value of a change rate existing when a plurality of frequency response amplitudes are close to the target local maximum value is greater than an absolute value of a change rate existing when the plurality of frequency response amplitudes are close to the another local maximum value. A low-frequency oscillation amplitude of the power converter at a frequency corresponding to the target local maximum value is greater than a low-frequency oscillation amplitude at a frequency corresponding to the another local maximum value. Therefore, if the amplitude of the target second signal whose amplitude is the target local maximum value is reduced, low-frequency oscillation control effect can be improved.

In a possible implementation, a frequency of the target second signal is a target frequency, and the controller is configured to reduce an amplitude of a second signal corresponding to any frequency in a specified frequency range, where an absolute value of a difference between the any frequency in the specified frequency range and the target frequency is less than a preset difference. Herein, the controller may control to increase corresponding output virtual resistance of the power conversion circuit at or near the target frequency, to reduce the amplitude of the second signal whose amplitude is the local maximum value or an amplitude set including the local maximum value of a second signal that includes the local maximum value.

In a possible implementation, the first signal and the second signal are sinusoidal signals.

According to a second aspect, this application provides a power converter. A direct current input of the power converter is configured to connect to a photovoltaic module or an energy storage battery. An alternating current output of the power converter is configured to connect to a power grid or a load. The power converter includes a power conversion circuit and a controller. The power conversion circuit is configured to convert a direct current into an alternating current. The controller inputs a plurality of first signals to a direct current input of the power conversion circuit. Frequencies of the plurality of first signals progressively increase or decrease, and amplitudes of the plurality of first signals are the same. Then an alternating current output of the power conversion circuit outputs a plurality of second signals. The first signals are in one-to-one correspondence with the second signals. In addition, the second signal and the corresponding first signal have a same frequency. Amplitudes of the plurality of second signals change as frequencies of the plurality of second signals progressively increase or decrease. The controller is further configured to reduce an amplitude of a target second signal, where the target second signal is a second signal whose amplitude is a maximum value in the plurality of second signals.

In this application, if the amplitude corresponding to the target second signal in the plurality of second signals output by the power conversion circuit is the maximum value, a low-frequency oscillation amplitude of the power converter at a frequency corresponding to the target second signal is relatively large. The controller reduces the amplitude of the target second signal, that is, reduces an amplitude of the second signal whose amplitude is the local maximum value in the plurality of second signals, to reduce low-frequency oscillation in a working process of the power converter, so that outputting of the power converter is more stable.

In a possible implementation, a frequency of the target second signal is a target frequency, and the controller is configured to reduce an amplitude of a second signal corresponding to any frequency in a specified frequency range, where an absolute value of a difference between the any frequency in the specified frequency range and the target frequency is less than a preset difference. Herein, the controller may control to increase corresponding output virtual resistance of the power conversion circuit at or near the target frequency, to reduce the amplitude of the second signal whose amplitude is the local maximum value or an amplitude set including the local maximum value of a second signal that includes the local maximum value.

According to a third aspect, this application provides a power supply system. The power supply system includes a plurality of power converters. A direct current input of the power converter is configured to connect to a photovoltaic module or an energy storage battery. Alternating current outputs of the plurality of power converters are connected in parallel and are configured to connect to a power grid through a point of common coupling. The power converter includes a power conversion circuit and a controller, and the power conversion circuit is configured to convert a direct current into an alternating current. A controller of at least one of the plurality of power converters is configured to input a plurality of first signals to a direct current input of the power conversion circuit. Frequencies of the plurality of first signals progressively increase or decrease, and amplitudes of the plurality of first signals are the same. Then an alternating current output of the power conversion circuit outputs a plurality of second signals. The first signals are in one-to-one correspondence with the second signals. The second signal and the corresponding first signal have a same frequency. Amplitudes of the plurality of second signals change as frequencies of the plurality of second signals progressively increase or decrease. A controller of each of the plurality of power converters is configured to reduce an amplitude of a target signal at the point of common coupling, where the target signal at the point of common coupling is a signal, at the point of common coupling, whose amplitude is a local maximum value in a plurality of signals at the point of common coupling, and the signal at the point of common coupling is superposition of the second signal and a power grid signal that has a same frequency as the second signal.

In a possible implementation, when amplitudes of the plurality of signals at the point of common coupling include two or more signals, at the point of common coupling, whose amplitudes are local maximum values, the amplitude of the target signal at the point of common coupling is a target local maximum value, and a change rate of amplitudes of the plurality of signals at the point of common coupling is the largest in a change range centered on the target local maximum value. A change rate near the target local maximum value is greater than a change rate near another local maximum value. In other words, an absolute value of a change rate existing when a plurality of frequency response amplitudes are close to the target local maximum value is greater than an absolute value of a change rate existing when the plurality of frequency response amplitudes are close to the another local maximum value. A low-frequency oscillation amplitude of the power converter at a frequency corresponding to the target local maximum value is greater than a low-frequency oscillation amplitude at a frequency corresponding to the another local maximum value. Therefore, if the frequency corresponding to the target local maximum value is set as a target frequency, low-frequency oscillation control effect can be improved.

In a possible implementation, a frequency of the target signal at the point of common coupling is a target frequency, and the controller is configured to reduce an amplitude of a signal at the point of common coupling corresponding to any frequency in a specified frequency range, where an absolute value of a difference between the any frequency in the specified frequency range and the target frequency is less than a preset difference. Herein, the controller may control to increase corresponding output virtual resistance of the power conversion circuit at or near the target frequency, to reduce the amplitude of the second signal whose amplitude is the local maximum value or an amplitude set including the local maximum value of a second signal that includes the local maximum value.

In a possible implementation, the power supply system further includes a power station controller. The power station controller is configured to input the plurality of first signals to the direct current input of the power conversion circuit, where the frequencies of the plurality of first signals progressively increase or decrease, and the amplitudes of the plurality of first signals are the same. Then the alternating current output of the power conversion circuit outputs the plurality of second signals, where the first signals are in one-to-one correspondence with the second signals, the second signal and the corresponding first signal have the same frequency, and the amplitudes of the plurality of second signals change as the frequencies of the plurality of second signals progressively increase or decrease. The power station controller is further configured to reduce the amplitude of the target signal at the point of common coupling, where the target signal at the point of common coupling is the signal, at the point of common coupling, whose amplitude is the local maximum value in the plurality of signals at the point of common coupling, and the signal at the point of common coupling is superposition of the second signal and the power grid signal that has the same frequency as the second signal. Herein, the controller superposes the power grid signal on the second signal output by the power conversion circuit, and adjusts to reduce the amplitude of the signal, at the point of common coupling, whose amplitude is the local maximum value in the plurality of signals at the point of common coupling. In this case, in a low-frequency oscillation suppression process, impact of the devices and a working status of the power grid are both considered. This improves low-frequency oscillation control effect.

## BRIEF DESCRIPTION OF DRAWINGS

FIG. 1 is a diagram of an application scenario of a power supply system according to this application;
FIG. 2 is a diagram of a structure of a power supply system according to this application;
FIG. 3 is a diagram of another structure of a power supply system according to this application;
FIG. 4 is a diagram of a waveform of a frequency response of a power converter system according to this application;
FIG. 5 is a diagram of another waveform of a frequency response of a power converter system according to this application; and
FIG. 6 is a diagram of closed-loop control of a power converter according to this application.

## DESCRIPTION OF EMBODIMENTS

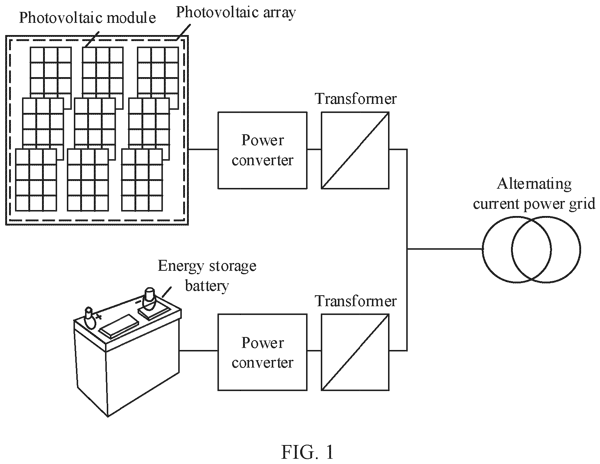

FIG. 1 is a diagram of an application scenario of a power supply system according to this application. The power supply system provided in this application includes a direct current power supply and a power converter. The direct current power supply may include a photovoltaic array. An output of the photovoltaic array may be connected to a direct current input of the power converter. An alternating current output of the power converter is connected to an alternating current power grid. In the power supply system shown in FIG. 1, the photovoltaic array may include one or more photovoltaic strings connected in parallel, and one photovoltaic string may be obtained by connecting one or more photovoltaic modules in series. The power converter may invert a voltage of a direct current provided by the photovoltaic array, and output an alternating current to the alternating current power grid, to supply power to a power consuming device like a communication base station or a household device in the alternating current power grid.

In some feasible implementations, refer to FIG. 1 again. The direct current power supply may further include an energy storage battery, an output of the energy storage battery may be connected to the direct current input of the power converter, and the alternating current output of the power converter is connected to the alternating current power grid. The power converter may invert a direct current provided by the energy storage battery, and output an alternating current obtained through inversion to the alternating current power grid for power supply.

In some feasible implementations, refer to FIG. 1 again. The power supply system may include a transformer. The alternating current output of the power converter may be connected to the alternating current power grid through the transformer. The transformer may change (for example, boost or buck a voltage for) the alternating current provided by the power converter, and supply a transformed alternating current to the alternating current power grid for power supply.

In the application scenario shown in FIG. 1, in a process of supplying power to the alternating current power grid, a rotor motion equation may be introduced into a control algorithm of the power converter in the power supply system, so that the power converter simulates external characteristics of a conventional synchronous generator, and presents equivalent inertia and damping characteristics to the power grid, to suppress output power fluctuation, provide active frequency and voltage support for the alternating power grid, and improve system stability. Specifically, an output voltage amplitude and a power angle may be obtained by using an outer-loop virtual synchronous generator control algorithm with reference to an active power reference value and a reactive power reference value of the power converter, and an obtained instantaneous active power value and an obtained reactive power value that are output by the power converter. The voltage amplitude and the power angle output corresponding control signals through inner voltage and current loops. Finally, a switching transistor in the power converter is controlled to be turned on or off by using a control signal generated through pulse width modulation, to further simulate an output power characteristic of a conventional synchronous generator. However, in a process in which the power converter simulates an external characteristic of the conventional synchronous generator, a damping torque is equivalently superposed in a control loop due to reasons such as an inertia part, an excitation part, and long-distance power transmission of a motor. When an introduced equivalent negative damping is greater than a positive damping coefficient of the system, low-frequency oscillation of output power of the power converter may occur, resulting in unstable work of the power system.

In the power supply system provided in this application, the power converter includes a power conversion circuit and a controller. The power conversion circuit is configured to: invert a direct current voltage into an alternating current voltage for output. The controller generates a plurality of excitation signals (which may be referred to as first signals) to be input to the power conversion circuit. Specifically, the first signals may be sinusoidal signals, or excitation signals whose frequencies progressively increase or decrease, or change according to another rule. The controller sequentially inputs a plurality of first signals whose amplitudes are first amplitudes to a direct current input of the power conversion circuit. Frequencies of the plurality of first signals may progressively increase or decrease in a first frequency range. After any first signal is input to the direct current input of the power conversion circuit, an alternating current output of the power conversion circuit outputs a second signal whose amplitude is a second amplitude. The first signals are in one-to-one correspondence with the second signals, the second signal and the corresponding first signal have a same frequency, and second amplitudes of the plurality of second signals change as frequencies of the plurality of second signals progressively increase or decrease. The controller performs discrete Fourier transform with a same frequency as the first signal based on outputting of the power conversion circuit performed after the first signal is input to the direct current input of the power conversion circuit, to obtain a system frequency response of the power converter, and obtain a frequency (namely, a resonance frequency, which may be referred to as a target frequency) corresponding to a second signal whose second amplitude is a local maximum value in the plurality of second signals. Herein, if an amplitude corresponding to the target frequency in the plurality of second signals output by the power conversion circuit in a frequency is the local maximum value, a low-frequency oscillation amplitude of the power converter at the target frequency is relatively large. The controller adjusts to increase output resistance (which may be virtual resistance) that is of the power conversion circuit and that corresponds to the target frequency, to reduce the amplitude of the second signal whose frequency is the target frequency. In this way, low-frequency oscillation is reduced in a working process of the power converter, and outputting of the power converter is more stable.

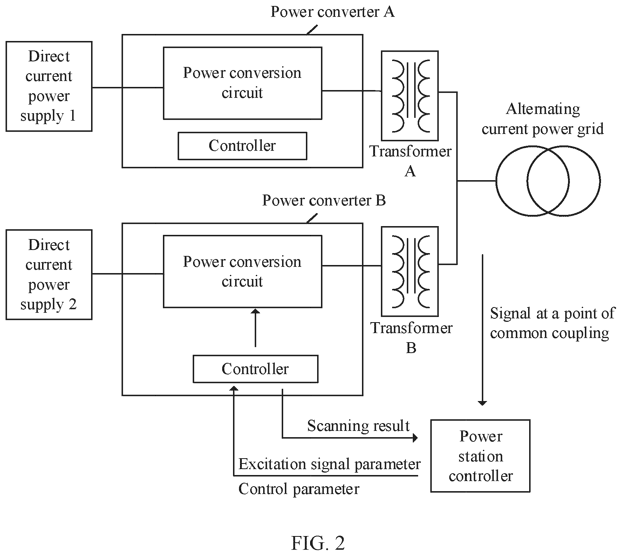

FIG. 2 is a diagram of a structure of a power supply system according to this application. The power supply system shown in FIG. 2 includes a direct current power supply and a power converter. A direct current power supply 1 and a direct current power supply 2 may be photovoltaic modules or energy storage batteries. A direct current input of a power converter A is connected to the direct current power supply 1 in the power supply system through a direct current bus. A direct current input of a power converter B is connected to the direct current power supply 2 in the power supply system through a direct current bus. An alternating current output of a power converter B may be connected in parallel to an alternating current output of the power converter A and then connected to an alternating current power grid. The alternating current output of the power converter A and the alternating current output of the power converter B may be connected in parallel and then connected to a point of common coupling, and are connected to the alternating current power grid through the point of common coupling. The direct current power supply 1 and the direct current power supply 2 are configured to respectively provide energy inputting or power inputting for the power converter A and the power converter B. The power converter A and the power converter B may respectively invert direct currents provided by the direct current power supply 1 and the direct current power supply 2, and outputs alternating currents obtained through inversion to the alternating current power grid for power supply.

In some feasible implementations, in the power supply system shown in FIG. 2, the power supply system includes a transformer, a second end of the power converter A may be connected to the alternating current power grid through a transformer A, and a second end of the power converter B may be connected to the alternating current power grid through a transformer B. The transformer A and the transformer B may change (for example, boost or buck a voltage for) the alternating currents provided by the power converter A and the power converter B, and supply a transformed alternating currents to the alternating current power grid for power supply. The power converter A and the power converter B include power conversion circuits and controllers. The controllers of the power converter A and the power converter B may generate a plurality of first signals to be input to the power conversion circuits. The power converter A is used as an example. Specifically, the first signals may be sinusoidal signals, or excitation signals whose frequencies progressively increase or decrease, or change according to another rule. The controller sequentially inputs a plurality of first signals whose amplitudes are first amplitudes to a direct current input of a power conversion circuit of the power converter A. Frequencies of the plurality of first signals may progressively increase or decrease in a first frequency range. After any first signal is input to the direct current input of the power conversion circuit, an alternating current output of the power conversion circuit outputs a second signal whose amplitude is a second amplitude. A frequency of the second signal is a frequency of any one of the foregoing first signals. The controller performs discrete Fourier transform with a same frequency as the first signal based on outputting of the power conversion circuit performed after the first signal is input to the direct current input of the power conversion circuit, to obtain a system frequency response of the power converter, and obtain a target frequency corresponding to a second signal whose second amplitude is a local maximum value in the plurality of second signals. Herein, if an amplitude corresponding to the target frequency in the plurality of second signals output by the power conversion circuit in a frequency is the local maximum value, a low-frequency oscillation amplitude of the power converter at the target frequency is relatively large. The controller adjusts to increase output virtual resistance that is of the power conversion circuit and that corresponds to the target frequency, to reduce the amplitude of the second signal whose frequency is the target frequency. In this way, low-frequency oscillation is reduced in a working process of the power converter A, and outputting of the power converter A is more stable.

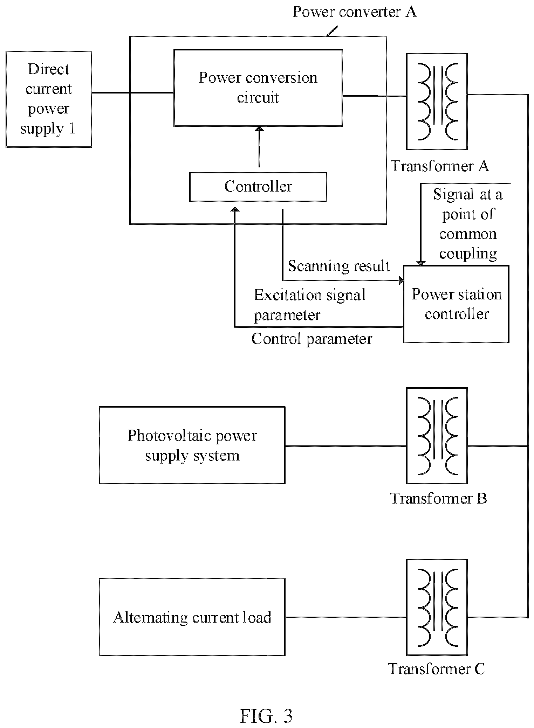

In some feasible implementations, the power supply system may be a micro grid system. FIG. 3 is a diagram of another structure of a power supply system according to this application. The power supply system shown in FIG. 3 includes a direct current power supply, a power converter, a photovoltaic power supply system, and an alternating current load. A direct current power supply 1 may be a photovoltaic module or an energy storage battery. A direct current input of a power converter A may be connected to the direct current power supply 1 in the power supply system through a direct current bus. An alternating current output of the power converter A may be connected to a primary-side winding of the transformer A, a secondary-side winding of the transformer A is connected to another transformer. The photovoltaic power supply system includes a photovoltaic module, a photovoltaic inverter, and the like. The photovoltaic power supply system may be connected to the another transformer through a transformer B, and the alternating current load may be connected to the another transformer through a transformer C. The direct current power supply 1 is configured to provide energy inputting or power inputting for the power converter A. The power converter A may invert a direct current provided by the direct current power supply 1, and output an alternating current obtained through inversion the transformer A. The transformer A and the transformer B may change (for example, boost or buck a voltage for) the alternating current provided by the power converter A, and provide transformed alternating currents to the alternating current load for power supply. The power converter A includes a power conversion circuit and a controller. The controller of the power converter A may generate a plurality of first signals to be input to the power conversion circuit. The controller sequentially inputs a plurality of first signals whose amplitudes are first amplitudes to a direct current input of a power conversion circuit of the power converter A. Frequencies of the plurality of first signals may progressively increase or decrease in a first frequency range. After any first signal is input to the direct current input of the power conversion circuit, an alternating current output of the power conversion circuit outputs a second signal whose amplitude is a second amplitude. A frequency of the second signal is a frequency of any one of the foregoing first signals. The controller performs discrete Fourier transform with a same frequency as the first signal based on outputting of the power conversion circuit performed after the first signal is input to the direct current input of the power conversion circuit, to obtain a system frequency response of the power converter, and obtain a target frequency corresponding to a second signal whose second amplitude is a local maximum value in the plurality of second signals. The controller adjusts to increase output virtual resistance that is of the power conversion circuit and that corresponds to the target frequency, to reduce the amplitude of the second signal whose frequency is the target frequency. In this way, low-frequency oscillation is reduced in a working process of the power converter A, and outputting of the power converter A is more stable.

The following describes the power converter provided in embodiments of this application by using an example with reference to FIG. 1 to FIG. 6. The power converter may use a grid-forming (GFM) control mode. The controller of the power converter may generate a plurality of first signals to be input to the power conversion circuit. Specifically, the first signals may be sinusoidal signals, or excitation signals whose frequencies progressively increase or decrease, or change according to another rule. The controller may set an amplitude of each first signal, a start frequency and an end frequency of the first signal, a frequency change step, and a quantity of frequency scanning periods, and sequentially input the plurality of first signals with specified parameters to the direct current input of the power conversion circuit. Frequencies of the plurality of input first signals may progressively increase or decrease periodically in a first frequency range. Herein, the first signal input by the controller to the power conversion circuit may be expressed as:

$$S_{inj} = A\sin(\omega t + \varphi_a)$$

A is the amplitude of the first signal, $\varphi_a$ is a phase of the first signal, $\omega$ is an angular frequency of the first signal, and $\omega$ may be expressed as $2\pi f$. f is a frequency of the first signal. After the first signal is input to the direct current input of the power conversion circuit, the second signal whose amplitude is the second amplitude is output by the alternating current output of the power conversion circuit, and a frequency of the second signal is equal to a frequency of the input first signal. In this case, the second signal may be expressed as:

$$S_{out} = B\sin(\omega t + \varphi_b)$$

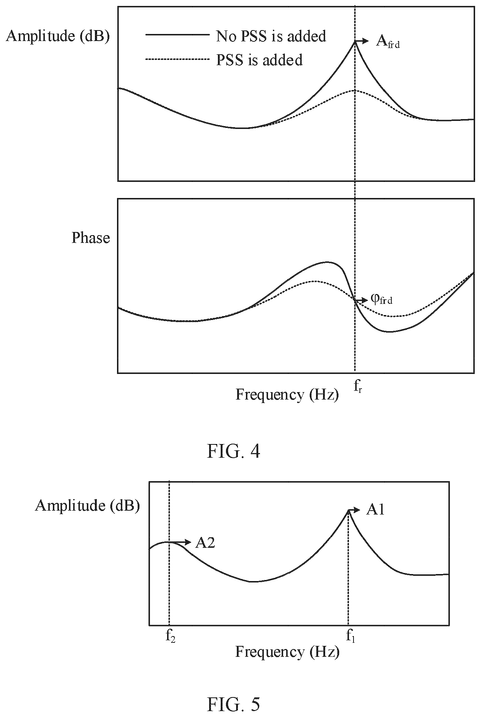

B is an amplitude of the second signal, $\varphi_b$ is a phase of the second signal, and the frequency of the second signal is equal to the frequency of the first signal. In this case, an angular frequency of the second signal is equal to the angular frequency $\omega$ of the first signal. For example, the controller sequentially inputs, to the direct current input of the power converter, n first signals: $A\sin(\omega_1 t + \varphi_{a1})$, $A\sin(\omega_2 t + \varphi_{a2})$, ..., and $A\sin(\omega_n t + \varphi_{an})$. The power converter performs an excitation response based on the n input first signals. For example, when the first signal $A\sin(\omega_1 t + \varphi_{a1})$ is input to the direct current input of the power converter, the power converter outputs a second signal $B_1\sin(\omega_1 t + \varphi_{b1})$ in response to the input first signal, and the alternating current output of the power converter separately outputs n second signals: $B_1\sin(\omega_1 t + \varphi_{b1})$, $B_2\sin(\omega_2 t + \varphi_{b2})$, ..., and $B_n\sin(\omega_n t + \varphi_{bn})$. The controller performs discrete Fourier transform with a same frequency as the first signal based on outputting of the power conversion circuit performed after the first signal is input to the direct current input of the power conversion circuit, to obtain a system frequency response of the power converter. FIG. 4 is a diagram of a waveform of a frequency response of a power converter system according to this application. As shown in FIG. 4, FIG. 4 includes an amplitude-frequency diagram of a change relationship between an amplitude and a frequency of the frequency response of the power converter (expressed in a logarithmic scale), and a phase-frequency diagram of a change relationship between a phase and a frequency of the frequency response (expressed in a logarithmic scale). For example, after the first signals, namely, $A\sin(\omega_1 t + \varphi_{a1})$, $A\sin(\omega_2 t + \varphi_{a2})$, ..., and $A\sin(\omega_n t + \varphi_{an})$ are input to the direct current input of the power conversion circuit, the controller performs discrete Fourier transform with a same frequency as the first signal based on outputting of the power conversion circuit performed after the first signal is input to the direct current input of the power conversion circuit, to obtain a system frequency response of the power converter. Amplitudes of the amplitude-frequency diagram corresponding to the system frequency response of the power converter may be $B_1$, $B_2$, ..., and $B_n$ in the n output second signals, namely, $B_1\sin(\omega_1 t + \varphi_{b1})$, $B_2\sin(\omega_2 t + \varphi_{b2})$, .., and $B_n\sin(\omega_n t + \varphi_{bn})$, or may be respective ratios of $B_1$, $B_2$, ..., and $B_n$ to A.

Before the controller adjusts a response of the power converter at a target frequency fr through a power system stabilizer (Power System Stabilizer, PSS) algorithm, a frequency corresponding to a local maximum value in a plurality of frequency response amplitudes is the target frequency fr (or may be referred to as a resonant frequency).

An amplitude response at the target frequency fr is $A_{frd}$, and a phase is $\varphi_{frd}$. Optionally, in the amplitude-frequency diagram of the change relationship between the amplitude and the frequency of the frequency response of the power converter, a plurality of amplitudes include a plurality of local maximum values. The controller may select a frequency corresponding to a target local maximum value from the plurality of local maximum values as the target frequency, and a change rate of the plurality of amplitudes is the largest in a change range centered on the target local maximum value. FIG. 5 is a diagram of another waveform of a frequency response of a power converter system according to this application. As shown in FIG. 5, FIG. 5 includes an amplitude-frequency diagram of a change relationship between a decibel value and a frequency of the frequency response of the power converter (expressed in a logarithmic scale). A plurality of frequency response amplitudes include a local maximum value A1 and a local maximum value A2. The local maximum value A1 and the local maximum value A2 correspond to frequencies f1 and f2 respectively. Herein, a change rate near the local maximum value A1 is greater than a change rate near the local maximum value A2. In other words, an absolute value of a change rate existing when a plurality of frequency response amplitudes are close to the local maximum value A1 is greater than an absolute value of a change rate existing when the plurality of frequency response amplitudes are close to the local maximum value A2. A low-frequency oscillation amplitude of the power converter at the frequency f1 is greater than a low-frequency oscillation amplitude at the frequency f2. Therefore, if the frequency f1 corresponding to the local maximum value A1 is set as a target frequency, low-frequency oscillation control effect is improved.

In some feasible implementations, the frequency response of the power converter system shown in FIG. 4 is used as an example. The response of the power converter at the target frequency fr may be expressed as:

$$\frac{S_{out}(j2\pi f_r)}{S_{inj}(j2\pi f_r)}\Big|_{wPSS} = A_{frd} \angle \varphi_{frd}$$

$S_{inj}$ is the first signal input by the controller to the power converter, and $S_{out}$ is the second signal output by the power converter when the first signal is input. Further, the controller may adjust the response of the power converter at the target frequency fr, to reduce a response amplitude at the target frequency fr (that is, apply damping at the target frequency fr), and reduce low-frequency oscillation of the power converter in a working process. Specifically, the controller may adjust the response of the power converter at the target frequency fr by using the PSS algorithm.

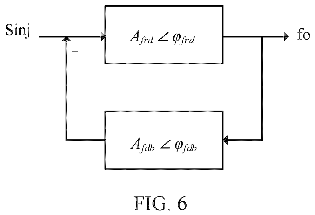

FIG. 6 is a diagram of closed-loop control of a power converter according to this application. As shown in FIG. 6, in closed-loop control in which the first signal $S_{inj}$ is used as inputting and the second signal $S_{out}$ is used as outputting, the controller may add a PSS algorithm-based feedback loop to the closed-loop control based on a forward transfer function $A_{frd} < \varphi_{frd}$, and a response of the feedback loop at the target frequency fr may be expressed as $A_{fdb} < \varphi_{fdb}$. In this case, after the PSS algorithm-based feedback loop is added, a response of the power converter at the target frequency fr may be expressed as:

$$\frac{S_{out}(j2\pi f_r)}{S_{inj}(j2\pi f_r)}\Big|_{wPSS} = \frac{A_{frd} \angle \varphi_{frd}}{1 + A_{frd} \angle \varphi_{frd} \cdot A_{fdb} \angle \varphi_{fdb}}$$

$A_{fdb}$ and $\varphi_{fdb}$ are respectively an amplitude response and a phase of the PSS algorithm-based feedback loop at the target frequency fr. The controller may add the PSS algorithm-based feedback loop to the closed-loop response control, and set a center frequency in phase compensation as the target frequency fr. A phase of the feedback loop of the PSS algorithm at the target frequency fr is - $\varphi_{frd}$, and an amplitude $A_{fdb}$ of the feedback loop of the PSS algorithm at the target frequency fr is (X- 1)/$A_{frd}$. In this case, a response of the power converter at the target frequency fr may be expressed as:

$$\frac{S_{out}(j2\pi f_r)}{S_{inj}(j2\pi f_r)}\Big|_{wPSS} = \frac{A_{frd}}{X} \angle \varphi_{frd}$$

In this way, the response amplitude at the target frequency fr is X times lower. Refer to FIG. 4 again. After the controller adjusts the response of the power converter at the target frequency fr by using the PSS algorithm, the response amplitude $A_{frd}$ at the target frequency fr decreases from a value at a solid line to a value at a dashed line.

In other words, virtual resistance corresponding to the target frequency fr output by the controller is X times higher. This reduces low-frequency oscillation in a working process of the power converter.

In some feasible implementations, the controller may add the PSS algorithm-based feedback loop to the closed-loop response control, and set a center frequency in phase compensation as the target frequency fr. In this case, a phase of the feedback loop of the PSS algorithm at the target frequency fr may be any phase value in a preset phase range, for example, may be any phase value in a range of - $\varphi_{frd}$- 30° to - $\varphi_{frd}$ + 30°.

In some feasible implementations, the controller of the power converter may superpose the first signal on a reactive power reference or an active power reference in grid-forming control of the power converter, to input the first signal to the power converter. In the grid-forming control of the power converter, the controller may control reactive output power or active output power of the power converter based on the reactive power reference or the active power reference. The controller may perform discrete Fourier transform with a same frequency as the first signal based on outputting of the power conversion circuit performed when the first signal is input to the power conversion circuit, to obtain the system frequency response of the power converter.

In some feasible implementations, the power supply system may include a plurality of power converters and a power station controller. Refer to FIG. 2 again. The controller of the power converter B is used as an example. The controller of the power converter B may obtain a first signal parameter from the station controller, including an amplitude of the first signal, a start frequency and an end frequency of the first signal, a frequency change step, and a quantity of frequency scanning periods, and sequentially input the plurality of first signals with specified parameters to the direct current input of the power conversion circuit of the power converter B. After any first signal is input to the direct current input of the power conversion circuit, the alternating current output of the power conversion circuit outputs the second signal whose amplitude is the second amplitude. The frequency of the second signal is the frequency of any one of the foregoing first signals. The station controller may obtain a frequency corresponding to a signal, at the point of common coupling, whose amplitude is a local maximum value in a plurality of signals at the point of common coupling after the plurality of first signals are input to the direct current input of the power conversion circuit, use the frequency corresponding to the signal, at the point of common coupling, whose amplitude is the local maximum value as the target frequency, set a control parameter based on the target frequency, and send the control parameter to the controller. The control parameter may include a phase and an amplitude that are set by a feedback loop of the PSS algorithm at the target frequency. The controller adjusts, based on the control parameter, the output virtual resistance corresponding to the target frequency, to control to reduce the amplitude of the signal at the point of common coupling whose frequency is the target frequency. In this way, low-frequency oscillation is reduced in a working process of the power converter, and outputting of the power converter is more stable. It may be understood that the power supply system shown in FIG. 3 may also include a plurality of power converters and a power station controller, and a data exchange process between the power station controller and controllers of the power converters is similar to an interaction process shown in FIG. 2. Details are not described herein again.

In some feasible implementations, frequencies of the plurality of first signals sequentially input by the controller to the power conversion circuit progressively increase or decrease in the first frequency range. The first frequency range may be 0.1 Hz to 2.5 Hz. That is, the frequencies of the plurality of first signals may increase from 0.1 Hz to 2.5 Hz based on a specified step, alternatively, may decrease from 2.5 Hz to 0.1 Hz based on the specified step.

In some feasible implementations, the alternating current output of the power conversion circuit in the power converter may be coupled to the power grid through the point of common coupling. The point of common coupling may be a parallel connection point between the power converter and an alternating current output of another power converter. The point of common coupling includes outputting of each power conversion circuit and a signal from the power grid. The controller may obtain a target frequency based on a signal at the point of common coupling. The target frequency is a frequency corresponding to a signal, at the point of common coupling, whose amplitude is a local maximum value in the plurality of signals at the point of common coupling. Any signal at the point of common coupling is superposition of the second signal output by the alternating current output of the power converter and a power grid signal that has a same frequency as the second signal. An amplitude of any signal at the point of common coupling is the second amplitude of the second signal plus an amplitude of the power grid signal that has a same frequency as the second signal. Herein, the controller reduces an amplitude of a target signal at the point of common coupling. The target signal at the point of common coupling is the signal, at the point of common coupling, whose amplitude is the local maximum value in the plurality of signals at the point of common coupling. Specifically, the controller superposes the power grid signal on the second signal output by the power conversion circuit, to obtain the target frequency, and adjusts to increase the output resistance (which may be virtual resistance) that is of the power conversion circuit and that corresponds to the target frequency, to reduce the amplitude of the target signal at the point of common coupling. In this case, in a low-frequency oscillation suppression process, impact of the devices and a working status of the power grid are both considered. This improves low-frequency oscillation control effect.

In some feasible implementations, after the controller of the power converter obtains the target frequency, the controller may adjust to increase output virtual resistance that is of the power conversion circuit and that corresponds to any frequency in a second frequency range, to reduce a second amplitude of the second signal corresponding to the any frequency of the frequency in the second frequency range, where an absolute value of a difference between the any frequency in the second frequency range and the target frequency is less than a preset difference. For example, the controller obtains the target frequency fr, and the specified second frequency range may be a frequency range represented by 0.9* fr to 1.1 fr. The controller may adjust to increase output virtual resistance corresponding to any frequency value of the power conversion circuit from 0.9* fr to 1.1 fr, to reduce a second amplitude value of a second signal corresponding to any frequency between 0.9* fr and 1.1 fr. Herein, the controller may control to increase corresponding output virtual resistance of the power conversion circuit at or near the target frequency, to reduce an amplitude of a second signal whose amplitude is the local maximum value or an amplitude set including the local maximum value in the plurality of second amplitudes corresponding to the output second signals, to reduce low-frequency oscillation in a working process of the power converter.

In some feasible implementations, the power supply system includes a plurality of power converters, direct current inputs of the power converters are configured to connect to a direct current source like a photovoltaic module or an energy storage battery, and alternating current outputs of the plurality of power converters are connected in parallel and then coupled to the power grid. A parallel connection point of the alternating current outputs of the plurality of power converters is the point of common coupling. A controller of at least one of the plurality of power converters may sequentially input a plurality of first signals to the direct current input of the power conversion circuit, and obtain a target frequency based on a signal at the point of common coupling obtained when the first signal is input to the power conversion circuit. The target frequency is a frequency corresponding to a signal, at the point of common coupling, whose amplitude is a local maximum value in the plurality of signals at the point of common coupling. Any signal at the point of common coupling is superposition of the second signal output by the alternating current of the power converter and a power grid signal that has a same frequency as the second signal. An amplitude of any signal at the point of common coupling is the second amplitude of the second signal plus an amplitude of the power grid signal that has a same frequency as the second signal. The controller may further adjust to increase output virtual resistance that is of the power conversion circuit and that corresponds to the target frequency, to reduce the second amplitude of the second signal whose frequency is the target frequency. Specifically, for example, the power supply system includes N power converters. Controllers of the M power converters in the plurality of power converters may input first signals to the direct current input of the power conversion circuit. The controllers of the power converters obtain the target frequency based on a signal at the point of common coupling obtained when the first signal is input to power conversion circuits of the M power converters, and adjusts to increase output virtual resistance that is of the corresponding power conversion circuits and that corresponds to the target frequency. Herein, the controllers of the power converters may add the PSS algorithm-based feedback loop to the closed-loop response control, and set a center frequency in phase compensation as the target frequency fr. A phase of the feedback loop of the PSS algorithm at the target frequency fr is $-\varphi_{frd}$, and an amplitude $A_{fdb}$ of the feedback loop of the PSS algorithm at the target frequency fr is $M \times (X- 1)/(N \times A_{frd})$. M is not greater than N. The PSS algorithm-based feedback loop is added to the closed-loop response control, so that the response amplitude at the target frequency fr is X times lower, that is, output virtual resistance corresponding to the target frequency fr is X times higher. This reduces low-frequency oscillation in a working process of the power converter.

In some feasible implementations, the power supply system includes a plurality of power converters, direct current inputs of the power converters are configured to connect to a direct current source like a photovoltaic module or an energy storage battery, and alternating current outputs of the plurality of power converters are connected in parallel and then coupled to the power grid. A parallel connection point of the alternating current outputs of the plurality of power converters is the point of common coupling. A controller of one target power converter in the plurality of power converters may sequentially input a plurality of first signals to the direct current input of the power conversion circuit. A controller of each power converter obtains a target frequency based on a signal at the point of common coupling obtained when the first signal is input to the power conversion circuit of the target power converter. The target frequency is a frequency corresponding to a signal, at the point of common coupling, whose amplitude is a local maximum value in the plurality of signals at the point of common coupling. Any signal at the point of common coupling is superposition of the second signal output by the alternating current of the power converter and a power grid signal that has a same frequency as the second signal. An amplitude of any signal at the point of common coupling is the second amplitude of the second signal plus an amplitude of the power grid signal that has a same frequency as the second signal. The controller of each power converter may further adjust to increase output virtual resistance that is of the power conversion circuit and that corresponds to the target frequency, to reduce the second amplitude of the second signal whose frequency is the target frequency. Herein, the controller of each power converter may add the PSS algorithm-based feedback loop to the closed-loop response control, and set a center frequency in phase compensation as the target frequency fr. A phase of the feedback loop of the PSS algorithm at the target frequency fr is $-\varphi_{frd}$, and an amplitude $A_{fdb}$ of the feedback loop of the PSS algorithm at the target frequency fr is $(X- 1)/(N \times A_{frd})$. The PSS algorithm-based feedback loop is added to the closed-loop response control, so that the response amplitude at the target frequency fr is X times lower, that is, output virtual resistance corresponding to the target frequency fr is X times higher. This reduces low-frequency oscillation in a working process of the power converter.

In some feasible implementations, the power supply system includes a plurality of power converters, direct current inputs of the power converters are configured to connect to a direct current source like a photovoltaic module or an energy storage battery, and alternating current outputs of the plurality of power converters are connected in parallel and then coupled to the power grid. A parallel connection point of the alternating current outputs of the plurality of power converters is the point of common coupling. A controller of each of the plurality of power converters may sequentially input a plurality of first signals to the direct current input of the power conversion circuit. A controller of any power converter obtains a target frequency based on a signal at the point of common coupling obtained when the first signal is input to the power conversion circuit of the target power converter. The target frequency is a frequency corresponding to a signal, at the point of common coupling, whose amplitude is a local maximum value in the plurality of signals at the point of common coupling. Any signal at the point of common coupling is superposition of the second signal output by the alternating current of the power converter and a power grid signal that has a same frequency as the second signal. An amplitude of any signal at the point of common coupling is the second amplitude of the second signal plus an amplitude of the power grid signal that has a same frequency as the second signal. The controller of each power converter may further adjust to increase output virtual resistance that is of the power conversion circuit and that corresponds to the target frequency, to reduce the second amplitude of the second signal whose frequency is the target frequency. Herein, the controller of each power converter may add the PSS algorithm-based feedback loop to the closed-loop response control, and set a center frequency in phase compensation as the target frequency fr. A phase of the feedback loop of the PSS algorithm at the target frequency fr is $-\varphi_{frd}$, and an amplitude $A_{fdb}$ of the feedback loop of the PSS algorithm at the target frequency fr is $(X- 1)/A_{frd}$. The PSS algorithm-based feedback loop is added to the closed-loop response control, so that the response amplitude at the target frequency fr is reduced to 1/X, that is, output virtual resistance corresponding to the target frequency fr is X times higher. This reduces low-frequency oscillation in a working process of the power converter.

## Claims

1. A power converter, wherein a direct current input of the power converter is configured to connect to a photovoltaic module or an energy storage battery, an alternating current output of the power converter is configured to connect to a power grid or a load, and the power converter comprises a power conversion circuit and a controller, wherein the power conversion circuit is configured to convert a direct current into an alternating current; the controller is configured to input a plurality of first signals to a direct current input of the power conversion circuit, wherein frequencies of the plurality of first signals progressively increase or decrease, and amplitudes of the plurality of first signals are the same; then an alternating current output of the power conversion circuit outputs a plurality of second signals, wherein the first signals are in one-to-one correspondence with the second signals, the second signal and the corresponding first signal have a same frequency, and amplitudes of the plurality of second signals change as frequencies of the plurality of second signals progressively increase or decrease; and the controller is further configured to reduce an amplitude of a target second signal, wherein the target second signal is a second signal whose amplitude is a local maximum value in the plurality of second signals.

2. The power converter according to claim 1, wherein when the plurality of second signals comprise two or more second signals whose amplitudes are local maximum values, the amplitude of the target second signal is a target local maximum value, and a change rate of amplitudes of the plurality of second signals is the largest in a change range centered on the target local maximum value.

3. The power converter according to claim 1 or 2, wherein a frequency of the target second signal is a target frequency, and the controller is configured to reduce an amplitude of a second signal corresponding to any frequency in a specified frequency range, wherein an absolute value of a difference between the any frequency in the specified frequency range and the target frequency is less than a preset difference.

4. The power converter according to any one of claims 1 to 3, wherein the first signal and the second signal are sinusoidal signals.

5. A power converter, wherein a direct current input of the power converter is configured to connect to a photovoltaic module or an energy storage battery, an alternating current output of the power converter is configured to connect to a power grid or a load, and the power converter comprises a power conversion circuit and a controller, wherein the power conversion circuit is configured to convert a direct current into an alternating current; the controller is configured to input a plurality of first signals to a direct current input of the power conversion circuit, wherein frequencies of the plurality of first signals progressively increase or decrease, and amplitudes of the plurality of first signals are the same; then an alternating current output of the power conversion circuit outputs a plurality of second signals, wherein the first signals are in one-to-one correspondence with the second signals, the second signal and the corresponding first signal have a same frequency, and amplitudes of the plurality of second signals change as frequencies of the plurality of second signals progressively increase or decrease; and the controller is further configured to reduce an amplitude of a target second signal, wherein the target second signal is a second signal whose amplitude is a maximum value in the plurality of second signals.

6. The power converter according to claim 5, wherein a frequency of the target second signal is a target frequency, and the controller is configured to reduce an amplitude of the second signal corresponding to any frequency in a specified frequency range, wherein an absolute value of a difference between the any frequency in the specified frequency range and the target frequency is less than a preset difference.

7. A power supply system, wherein the power supply system comprises a plurality of power converters, a direct current input of the power converter is configured to connect to a photovoltaic module or an energy storage battery, alternating current outputs of the plurality of power converters are connected in parallel and are configured to connect to a power grid through a point of common coupling, and the power converter comprises a power conversion circuit and a controller, wherein the power conversion circuit is configured to convert a direct current into an alternating current; a controller of at least one of the plurality of power converters is configured to input a plurality of first signals to a direct current input of the power conversion circuit, wherein frequencies of the plurality of first signals progressively increase or decrease, and amplitudes of the plurality of first signals are the same; then an alternating current output of the power conversion circuit outputs a plurality of second signals, wherein the first signals are in one-to-one correspondence with the second signals, the second signal and the corresponding first signal have a same frequency, and amplitudes of the plurality of second signals change as frequencies of the plurality of second signals progressively increase or decrease; and

a controller of each of the plurality of power converters is configured to reduce an amplitude of a target signal at the point of common coupling, wherein the target signal at the point of common coupling is a signal, at the point of common coupling, whose amplitude is a local maximum value in a plurality of signals at the point of common coupling, and the signal at the point of common coupling is superposition of the second signal and a power grid signal that has a same frequency as the second signal.

8. The power supply system according to claim 7, wherein when amplitudes of the plurality of signals at the point of common coupling comprise two or more signals, at the point of common coupling, whose amplitudes are local maximum values, the amplitude of the target signal at the point of common coupling is a target local maximum value, and a change rate of amplitudes of the plurality of signals at the point of common coupling is the largest in a change range centered on the target local maximum value.

9. The power supply system according to claim 7 or 8, wherein a frequency of the target signal at the point of common coupling is a target frequency, and the controller is configured to reduce an amplitude of the signal at the point of common coupling corresponding to any frequency in a specified frequency range, wherein an absolute value of a difference between the any frequency in the specified frequency range and the target frequency is less than a preset difference.

10. The power supply system according to any one of claims 7 to 9, wherein the power supply system further comprises a power station controller, wherein the power station controller is configured to input the plurality of first signals to the direct current input of the power conversion circuit, wherein the frequencies of the plurality of first signals progressively increase or decrease, and the amplitudes of the plurality of first signals are the same; then the alternating current output of the power conversion circuit outputs the plurality of second signals, the first signals are in one-to-one correspondence with the second signals, the second signal and the corresponding first signal have the same frequency, and the amplitudes of the plurality of second signals change as the frequencies of the plurality of second signals progressively increase or decrease; and
the power station controller is further configured to reduce the amplitude of the target signal at the point of common coupling, wherein the target signal at the point of common coupling is the signal, at the point of common coupling, whose amplitude is the local maximum value in the plurality of signals at the point of common coupling, and the signal at the point of common coupling is superposition of the second signal and the power grid signal that has the same frequency as the second signal.

Photovoltaic module   Photovoltaic array

Transformer

Power converter

Alternating current power grid

Energy storage battery

Transformer

Power converter

FIG. 1

FIG. 2

Power converter A

```
Direct
current
power
supply 1
```

Power conversion
circuit

Transformer A

Controller

Signal at a
point of
common
coupling

Scanning result

Excitation signal
parameter

Power station
controller

Control parameter

```
Photovoltaic power
supply system
```

Transformer B

```
Alternating current load
```

Transformer C

FIG. 3

FIG. 4

FIG. 5

Sinj → [ $A_{frd} \angle \varphi_{frd}$ ] → fo

[ $A_{fdb} \angle \varphi_{fdb}$ ]

FIG. 6

Europäisches
Patentamt

European
Patent Office

Office européen
des brevets

# EUROPEAN SEARCH REPORT

**Application Number**

EP 24 21 6874

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 112 202 211 A (UNIV NORTH CHINA ELECTRIC POWER) 8 January 2021 (2021-01-08) | 1,3-7,9, 10 | INV. H02J3/46 H02J3/38 |
| Y | * pages 1-7; figures 1/3-3/3 * | 2,8 | H02J3/24 |
| X | CN 110 854 936 A (UNIV NORTH CHINA ELECTRIC POWER) 28 February 2020 (2020-02-28) | 1,3-7,9, 10 | |
| Y | * pages 1-7,9; figures 1/3-3/3 * | 2,8 | |
| A | LI XIN ET AL: "Stability enhancement strategy of virtual synchronous generator for cascaded multilevel converter based energy storage system under weak grid conditions", IET RENEWABLE POWER GENERATION, THE INSTITUTION OF ENGINEERING AND TECHNOLOGY, MICHAEL FARADAY HOUSE, SIX HILLS WAY, STEVENAGE, HERTS. SG1 2AY, UK, vol. 14, no. 5, 6 April 2020 (2020-04-06), pages 695-704, XP006089946, ISSN: 1752-1416, DOI: 10.1049/IET-RPG.2019.0477 * pages 1-10 * | 1-10 | |
| Y | CN 113 435 065 A (UNIV NORTH CHINA ELECTRIC POWER) 24 September 2021 (2021-09-24) * page 6; figures 1/4-4/4 * | 2,8 | |

**TECHNICAL FIELDS SEARCHED (IPC)**

H02J

-/--

The present search report has been drawn up for all claims

| Place of search | Date of completion of the search | Examiner |
|---|---|---|
| Munich | 25 April 2025 | Krasser, Bernhard |

EPO FORM 1503 03.82 (P04C01)

page 1 of 2

Europäisches
Patentamt

European
Patent Office

Office européen
des brevets

**EUROPEAN SEARCH REPORT**

**Application Number**

EP 24 21 6874

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | QING-CHANG ZHONG: "PK!W[Content_Types].xml (W[o0~G?DyEMB", IEEE DRAFT WGDS; 1389302149439, IEEE-SA IMEET CENTRAL, PISCATAWAY, NJ USA , vol. 2988 8 December 2023 (2023-12-08), page 1, XP068299376, Retrieved from the Internet: URL:https://ieee-sa.imeetcentral.com/p/aQA AAAFFGVq [retrieved on 2023-12-15] * pages 5,23 * | 1-10 | |

----- 

| | | | TECHNICAL FIELDS SEARCHED (IPC) |
|---|---|---|---|

The present search report has been drawn up for all claims

| Place of search | Date of completion of the search | Examiner |
|---|---|---|
| Munich | 25 April 2025 | Krasser, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.....................................................................................................

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 24 21 6874

This annex lists the patent family members relating to the patent documents cited in the above-mentioned European search report.
The members are as contained in the European Patent Office EDP file on
The European Patent Office is in no way liable for these particulars which are merely given for the purpose of information.

25-04-2025

| Patent document cited in search report | | Publication date | Patent family member(s) | Publication date |
|---|---|---|---|---|
| CN 112202211 | A | 08-01-2021 | NONE | |
| CN 110854936 | A | 28-02-2020 | NONE | |
| CN 113435065 | A | 24-09-2021 | NONE | |

EPO FORM P0459

For more details about this annex : see Official Journal of the European Patent Office, No. 12/82